# EUROPÄISCHE PATENTSCHRIFT

(11) **EP 3 499 668 B1**
(45) Veröffentlichungstag und Bekanntmachung des Hinweises auf die Patenterteilung: **31.03.2021**
(21) Anmeldenummer: 18206228.1
(22) Anmeldetag: 14.11.2018
(51) Int. Cl.: H02G 5/02, H02B 1/14

(54) **MODULARES HALTEELEMENT ZUR BEFESTIGUNG EINER ELEKTRISCHEN SAMMELSCHIENE UND HALTEEINRICHTUNG ENTHALTEND EINE VIELZAHL SOLCHER HALTEELEMENTE**
MODULAR HOLDING ELEMENT FOR FASTENING AN ELECTRICAL BUS BAR AND HOLDING DEVICE COMPRISING A PLURALITY OF SUCH HOLDING ELEMENTS
ÉLÉMENT DE MAINTIEN MODULAIRE PERMETTANT DE FIXER UNE BARRE OMNIBUS ÉLECTRIQUE ET DISPOSITIF DE MAINTIEN CONTENANT UNE PLURALITÉ DE TELS ÉLÉMENTS DE MAINTIEN

(30) Priorität: 15.12.2017 DE 102017130233
(43) Veröffentlichungstag der Anmeldung: 19.06.2019
(73) Patentinhaber: ABB Schweiz AG, 5400 Baden (CH)
(72) Erfinder: Roth, Michael, 77880 Sasbach (DE)
(74) Vertreter: Kesselhut, Wolf

(56) Entgegenhaltungen:
- WO-A1-2014/161915
- AT-B- 276 527
- DE-A1- 2 211 165
- US-A1- 2014 060 890

## Beschreibung

Die Erfindung betrifft ein modulares Halteelement zur Befestigung einer elektrischen Sammelschiene und eine Halteeinrichtung enthaltend eine Vielzahl solcher Halteelemente gemäß dem Oberbegriff von Anspruch 1 und 9.

In Verteilern für elektrischen Strom, wie beispielsweise Schaltkästen oder Schaltschränken, werden bekanntermaßen Sammelschienen eingesetzt, um die im Verteiler angeordneten Installationsgeräte wie Sicherungsautomaten, Schalter und Zähler etc. mit den jeweiligen Phasen sowie dem Nullleiter und der Schutzerde zu verbinden. Die Sammelschienen umfassend hierzu z.B. Kupferprofile mit einem rechteckigen Querschnitt, die mit ihren Enden in jeweiligen Halteelementen aus einem elektrisch isolierenden Werkstoff aufgenommen werden, welche in der Regel am Gehäuse des Verteilers befestigt, bzw. als ein Teil desselben ausgeführt sind. Durch die vorgegebene Position der Halteelemente in den Verteilern wird die Konstruktion und Fertigung der Verteiler aufwändig und ermöglicht in der Regel keine flexible Positionierung der Sammelschienen innerhalb des Verteilers sowie auch keine Erweiterung, wenn z.B. in einem bestehenden Verteiler zusätzlich zu einer Sammelschiene für eine Phase noch zwei weitere Sammelschienen für eine zweite und dritte Phase eines Dreiphasen-Wechselstroms nachgerüstet werden sollen.

Aus der EP 2 738 881 B1 ist eine Verteilereinrichtung für eine Elektroinstallation bekannt. Diese umfasst eine Anschlussleistenanordnung, um Schutzerdungsleiter und Nullleiter anzuschließen. Die Anschlussleistenanordnung umfasst einen Befestigungsstreifen und Module, die am Befestigungsstreifen nebeneinander in einer Reihe befestigt werden können. Am Befestigungsstreifen sind Balken angeordnet, welche in einen Schlitz eingreifen können, der einem Modul zugeordnet ist. Hierdurch kann ein Modul formschlüssig mit dem Befestigungsstreifen verbunden werden.

Weiterhin beschreibt die DE 299 15 910 U1 eine Montagevorrichtung für elektrische Verteileranlagen, welche U-förmige Montageviellochschienen umfasst. Den Montageviellochschienen sind Montagetraversen zugeordnet, welche in der Einbautiefe und Höhe stufenlos einstellbar sind. An den Montagetraversen können Installationsgeräte montiert werden. Die Schrift gibt keinen Hinweis darauf, die Strom führenden Sammelschienen in einem Verteilerkasten über modulare Haltelemente an den Montageviellochschienen zu befestigen.

Die WO 2014/161915 A1 offenbart ein modulares Halteelement mit den Merkmale des Oberbegriffs des Anspruchs 1.

Demgemäß ist es eine Aufgabe der vorliegenden Erfindung ein modulares Halteelement sowie eine daraus zusammensetzbare Halteeinrichtung zu schaffen, mit denen sich prinzipiell beliebig viele stromführende Sammelschienen in einem elektrischen Verteiler in kürzester Zeit und mit geringem Aufwand montieren lassen.

Diese Aufgabe wird erfindungsgemäß durch ein modulares Halteelement mit den Merkmalen von Anspruch 1 sowie eine Halteeinrichtung mit den Merkmalen von Anspruch 9 gelöst.

Weitere Merkmale der Erfindung sind in den Unteransprüchen beschrieben.

Gemäß der Erfindung umfasst ein modulares Halteelement zur Befestigung einer elektrischen Sammelschiene an einer Lochschiene eines elektrischen Verteilers einen Grundköper, der einander gegenüberliegende erste und zweite Seitenflächen, eine orthogonal zu diesen angeordnete Klemmfläche sowie orthogonal zu den Seitenflächen und zu der Klemmfläche angeordnete erste und zweite Verbindungsabschnitte aufweist. In wenigstens einer der beiden Seitenflächen ist eine Ausnehmung zur Aufnahme eines Endes einer Sammelschiene geformt, welche bevorzugt ein Rechteckprofil ist. Der Grundkörper weist eine Öffnung auf, durch die hindurch ein Schraubelement zur Erzeugung einer Klemmkraft zwischen der Klemmfläche und der Lochschiene hindurchführbar ist, um das Halteelement an der Lochschiene zu befestigen. Die Verbindungsabschnitte sind einander gegenüberliegend am Grundkörper geformt, der vorzugsweise im Wesentlichen die Form eines Quaders besitzt, bei dem die Seitenflächen quadratisch sind und eine wesentlich größere Höhe/Breite aufweisen als die Verbindungsabschnitte sowie die Klemmfläche. Am ersten Verbindungsabschnitt ist ein weibliches Verbindungselement und am zweiten Verbindungsabschnitt ein komplementär zu diesem ausgebildetes männliches Verbindungselement geformt, welches unter Erzeugung eines Formschlusses in das weibliche Verbindungselement eines weiteren identisch ausgebildeten Halteelements einführbar ist.

Die Öffnung im Grundkörper umfasst eine im weiblichen Verbindungelement geformte erste Teilöffnung, die als Bohrung ausgeführt ist, und eine im männlichen Verbindungselement geformte zweite Teilöffnung, die ebenfalls als Bohrung ausgeführt ist, durch welche hindurch das Schraubelement zur Verriegelung der formschlüssigen Verbindung zwischen dem weiblichen und männlichen Verbindungsemelement hindurchführbar ist. Die erste Teilbohrung und die zweite Teilbohrung greifen dabei ineinander und verlaufen nach Art eines Türscharniers wechselweise entlang derselben Einschraubachse des Schraubelements, so dass nach dem Einfügen des Schraubelements in die Teilbohrungen die männlichen und weiblichen Verbindungselemente gegen ein Herausrutschen verriegelt werden. Hierdurch wird der Vorteil erhalten, dass zwei zusammengefügte Halteelemente in effizienter Weise mit Hilfe von lediglich einem Schraubelement an einer Lochschiene befestigt werden können, welches durch die beiden zusammengefügten Teilbohrungen zweier Halteelemente hindurch geführt wird. Alternativ können anstelle einer Lochschiene, welche die Montage deutlich vereinfacht, auch ein oder mehrere Dübellöcher mit Dübeln verwendet werden, um die Halteelemente in der zuvor beschriebenen Weise direkt an einer Gebäudewand zu befestigen.

Durch die Erfindung ergibt sich der Vorteil, dass zwei oder mehr Halteelemente über die weiblichen und männlichen Verbindungselemente in einer beliebigen, der gewünschten Zahl von Sammelschienen entsprechenden Anzahl modular ineinander gesteckt werden können, bevor diese mit Hilfe der Schraubelemente an den jeweiligen Lochschienen befestigt werden, welche zuvor paarweise gegenüberliegend an der Rückwand des Verteilers oder auch an einer Gebäudewand montiert werden. Ein weiterer Vorteil der Erfindung ist darin zu sehen, dass sich bei Bedarf ein, zwei oder auch mehr modulare Halteelemente an den zuvor an einer Lochschiene befestigten Halteelementen über die männlichen und weiblichen Verbindungselemente befestigten lassen, wenn eine, zwei oder gar mehr weitere Sammelschienen nachträglich innerhalb des Verteilers montiert werden sollen.

Nach einem weiteren der Erfindung zugrunde liegenden Gedanken weist das weibliche Verbindungselement eine T-förmige oder auch schwalbenschwanzförmige Nut und das männliche Verbindungselement einen T- förmigen oder pilzkopfförmigen Vorsprung auf, welcher eine der Form der Nut angepasste Form besitzt. Hierdurch ergibt sich der Vorteil, dass zwei modulare Halteelemente in Richtung der Normalen auf die Seitenflächen ineinander schiebbar sind und in der Richtung senkrecht hierzu durch die Nut-Feder-Verbindung zuverlässig gegen ein Verkippen gesichert werden. Zudem lassen sich für den Fall, dass die Halteelemente aus einem Werkstoff wie Kunststoff gefertigt sind, der eine gewisse Eigenelastizität besitzt, die männlichen Verbindungselemente geringfügig größer oder gleich groß wie die weiblichen Verbindungselemente ausgestalten, sodass diese mit einer gewissen Schwergängigkeit in die weiblichen Verbindungselemente eingeführt werden müssen. Hierdurch bleiben die beiden betreffenden Halteelemente auch ohne zusätzliche Sicherungsmittel miteinander verbunden und können als ein Bauteil gehandhabt werden, was wiederum dazu führt, dass sich die für die Montage mehrerer Sammelschienen in einem Verteiler benötigte Zeit in vorteilhafter Weise verkürzt.

Nach einem weiteren der Erfindung zugrunde liegenden Gedanken können an der Klemmfläche Vorsprünge geformt sein, welche zur Erzeugung eines Formschlusses in Löchern der Lochschiene aufnehmbar sind. Hierdurch wird die Montage der Halteelemente an einer Lochschiene weiter erleichtert, da über die Vorsprünge die korrekte Position der Halteelemente bezüglich der Gewindelöcher der Lochschiene vorgegeben wird, so dass die Schraubelemente leichter in die Gewindelöcher eingeschraubt werden können.

Bevorzugt ist in den Seitenflächen des Grundkörpers eine weitere Ausnehmung geformt, welche eine von der Ausnehmung abweichenden Form, z.B. eine Rechteckform mit einem kleineren Querschnitt, aufweist, um eine Sammelschiene mit einer solchen Querschnittsform aufzunehmen. Hierdurch lassen sich mit ein und demselben Haltelement wahlweise Sammelschienen mit zwei üblichen Profilgrößen in einem Verteiler montieren, was die Flexibilität weiter erhöht.

Um den geometrischen Abstand zwischen zwei benachbarten Sammelschienen zu vergrößern und dadurch mehr Raum zum Anklemmen der elektrischen Anschlüsse der Verbraucher zu schaffen, kann die Ausnehmung im Grundkörper eine rechteckige Querschnittsform aufweisen und die Längsachse der Ausnehmung gegenüber der Klemmfläche in einem Winkel α geneigt angeordnet sein, bevorzugt in einem Winkel von 45 °.

Weiterhin kann in der Ausnehmung ein entfernbarer Anschlag vorgesehen sein, welcher ein Hindurchschieben des freien Endes einer Sammelschiene verhindert. Hierdurch ergibt sich der Vorteil, dass ein erfindungsgemäßes Halteelement auch als Zwischenhalterung zum Halten von Sammelschienen eingesetzt werden kann, welche eine größere Länge aufweisen und sich in Querrichtung z.B. über drei oder mehr Reihen von Haltelementen hinweg erstrecken.

Bei der zuletzt beschriebenen Ausführungsform der Erfindung ist der Anschlag bei einem Grundkörper, der aus Kunststoffmaterial besteht, bevorzugt integral mit dem Grundkörper in einem Stück geformt, so dass der Anschlag z.B. mit einem Werkzeug, wie einer Zange, aus der Ausnehmung heraus gebrochen werden kann, um das Halteelemente als Zwischenhalter zu verwenden. Der Einsatz der Anschläge führt darüber hinaus zu dem weiteren Vorteil, dass die Stirnseiten der stromführenden Sammelschienen elektrisch gegenüber dem Außenraum isoliert werden, was die Sicherheit beachtlich erhöht, wenn die Halteelemente zu einer Halteeinrichtung verbunden werden, die als Seitenwand in einem Verteiler verwendet wird.

Gemäß einer weiteren Ausführungsform der Erfindung kann in einem der Klemmfläche gegenüberliegenden Frontabschnitt des Grundkörpers eine mit der Ausnehmung kommunizierende Durchgangsöffnung geformt sein, in welche eine Schraube zum klemmenden Fixieren der Sammelschiene in der Ausnehmung einschraubbar ist. Hierdurch eröffnet sich die Möglichkeit, dass die Sammelschiene und das erfindungsgemäße modulare Halteelement zuverlässig miteinander verklemmt werden können, so dass ein Herausrutschen der Enden der Sammelschienen aus den Ausnehmungen vermieden wird. Ein weiterer Vorteil der zuletzt beschriebenen Ausführungsform ist darin zu sehen, dass über die elektrisch leitende Schraube gewünschten Falls auch elektrische Zähler oder andere elektrische Geräte, wie z.B. Datenmodems, die nur einen geringen Stromverbrauch besitzen, direkt an die Sammelschiene angeschlossen werden können, ohne eine übliche Anschlussklemme zu verwenden, welche für deutlich größere Ströme ausgelegt ist und dementsprechend mehr Bauraum erfordert.

Nach einem weiteren der Erfindung zugrunde liegenden Gedanken umfasst eine Halteeinrichtung wenigstens zwei formschlüssig miteinander verbindbare und mittels eines Schraubelements an einer Lochschiene eines elektrischen Verteilers befestigbare modulare Halteelemente, die in der zuvor beschriebenen Weise ausgebildet sind. Diese können bei einer besonders kostengünstigen Ausführungsform der Erfindung die Seitenwände eines Verteilers bilden, bzw. als solche verwendet werden, welcher frontseitig durch eine Abdeckplatte verschließbar sein kann.

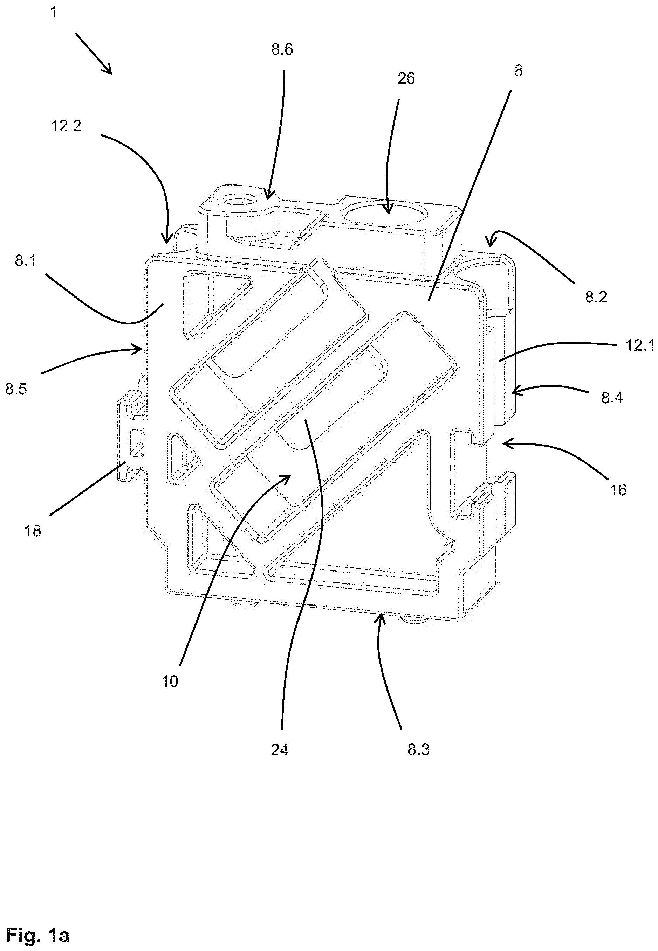

Die Erfindung wird nachfolgend mit Bezug auf die Zeichnungen anhand einer bevorzugten Ausführungsform beschrieben. In den Zeichnungen zeigen
- Fig. 1a: eine schematische räumliche Seitenansicht eines erfindungsgemäßen Halteelements,
- Fig. 1 b: eine weitere schematische räumliche Ansicht des Halteelements von Fig. 1a,
- Fig. 1c: eine Querschnittsansicht des Halteelements der Fig. 1a und 1b,
- Fig. 2a: eine Lochschiene mit einem daran bereits befestigten erfindungsgemäßen Halteelement vor dem Befestigen dreier weiterer Halteelemente,
- Fig. 2b: eine der Lochschiene von Fig. 2a gegenüberliegende Lochschiene zur Aufnahme eines gegenüberliegenden Endes einer nicht näher gezeigten Sammelschiene mit drei bereits montierten Halteelementen und einem weiteren noch zu montierenden Halteelement,
- Fig. 2c: die beiden Lochschienen von Fig. 2a und 2b mit daran aufgenommenen, aus je vier Halteelementen zusammengesetzten Halteeinrichtungen und zwischen diesen aufgenommenen vier Sammelschienen vor der endgültigen Fixierung der Halteeinrichtungen mittels Schraubelementen, und
- Fig. 3: einen Verteiler, bei welchem die Seitenwände durch die beiden Halteeinrichtungen von Fig. 2c geformt sind, und der Zugang zu den Sammelschienen durch eine Abdeckplatte abgedeckt wird, welche über Abstandshalter an den Lochschienen befestigt ist.

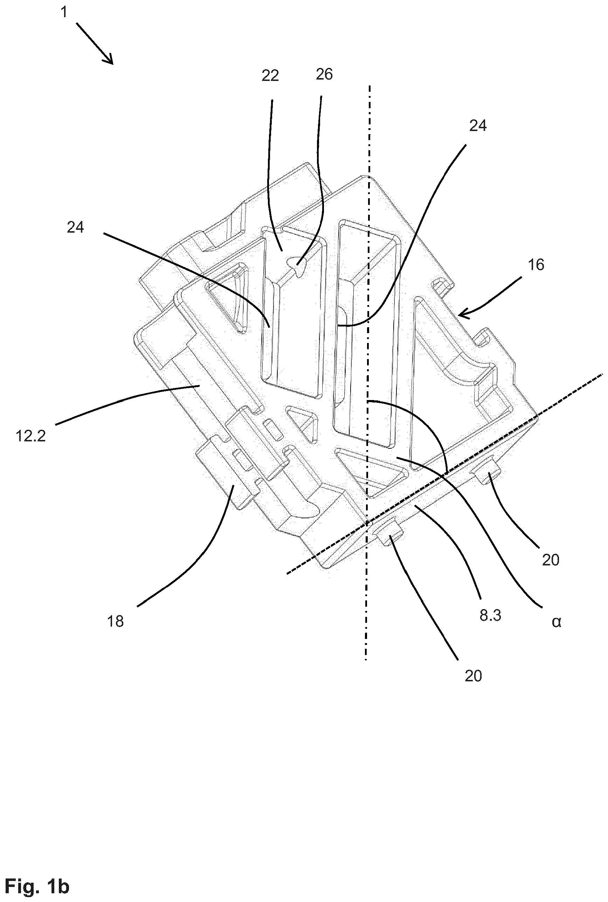

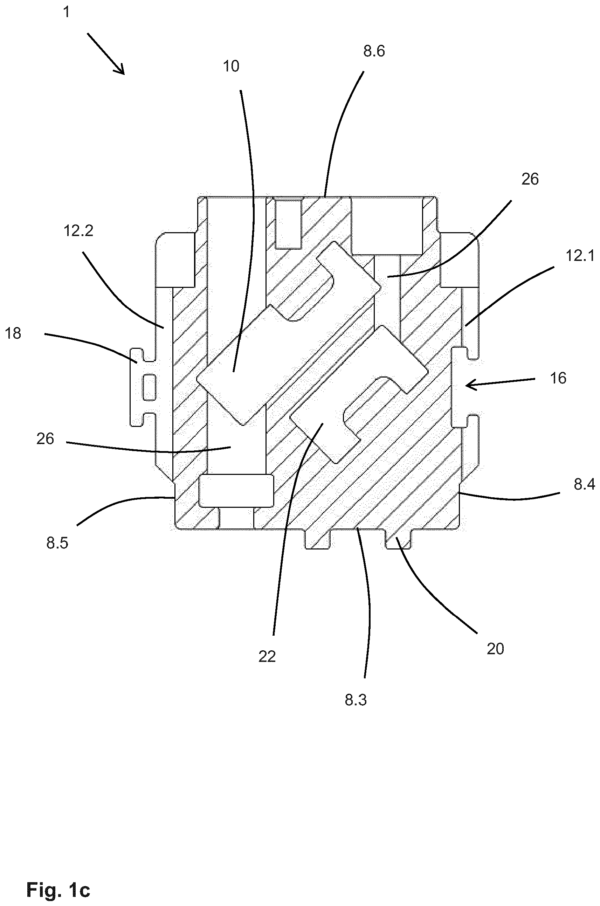

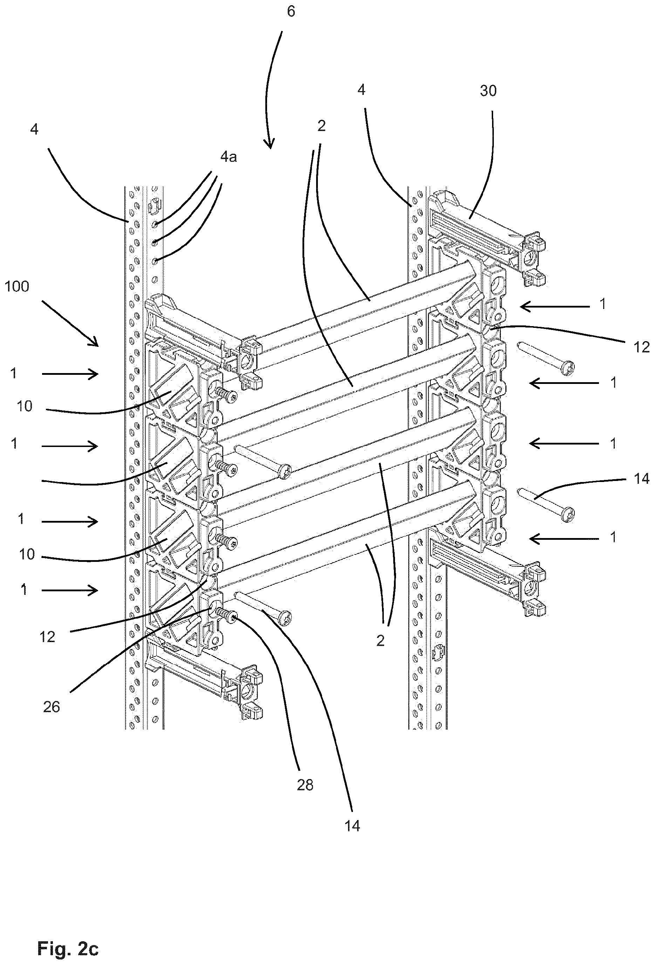

Wie in den Fig. 1 bis 3 gezeigt ist, umfasst ein modulares Halteelement 1 zur Befestigung einer elektrischen Sammelschiene 2 an einer Lochschiene 4 eines elektrischen Verteilers 6 einen Grundköper 8, der einander gegenüberliegende erste und zweite Seitenflächen 8.1, 8.2, eine orthogonal zu diesen angeordnete Klemmfläche 8.3 sowie orthogonal zu den Seitenflächen 8.1, 8.2 und zu der Klemmfläche 8.3 angeordnete Verbindungsabschnitte 8.4, 8.5 aufweist. In wenigstens einer der beiden Seitenflächen 8.1, 8.2 ist eine Ausnehmung 10 geformt, in der die Enden von Sammelschiene 2 aufgenommen werden, wie diese in Fig. 2c gezeigt ist. Die Sammelschienen haben hierzu bevorzugt einen rechteckigen Querschnitt und bestehen insbesondere aus Kupfer oder einem anderen gut leitenden Werkstoff.

Gemäß der Darstellung der Figuren 1a bis 1c weist der Grundkörper 8 eine Öffnung 12 auf, durch die hindurch ein Schraubelement 14 (Fig. 2c) zur Erzeugung einer Klemmkraft zwischen der Klemmfläche 8.3 und der Lochschiene 4 hindurchführbar ist, um das Halteelement 1 an der Lochschiene 4 zu befestigen. Die Schraubelemente 14 sind in Fig. 1c als Schraubbolzen ausgeführt, die in entsprechende Innengewinde in den Löchern 4a der Lochschiene 4 einschraubbar sind.

Wie der Darstellung der Fig. 1a weiterhin entnommen werden kann, sind der erste und zweite Verbindungsabschnitt 8.4, 8.5 einander gegenüberliegend am Grundkörper 8 geformt, der quaderförmig ist und bei dem die Seitenflächen 8.1 und 8.2 quadratisch sind und eine wesentlich größere Höhe/Breite aufweisen als die Verbindungsabschnitte 8.4 und 8.5 sowie die Klemmfläche 8.3.

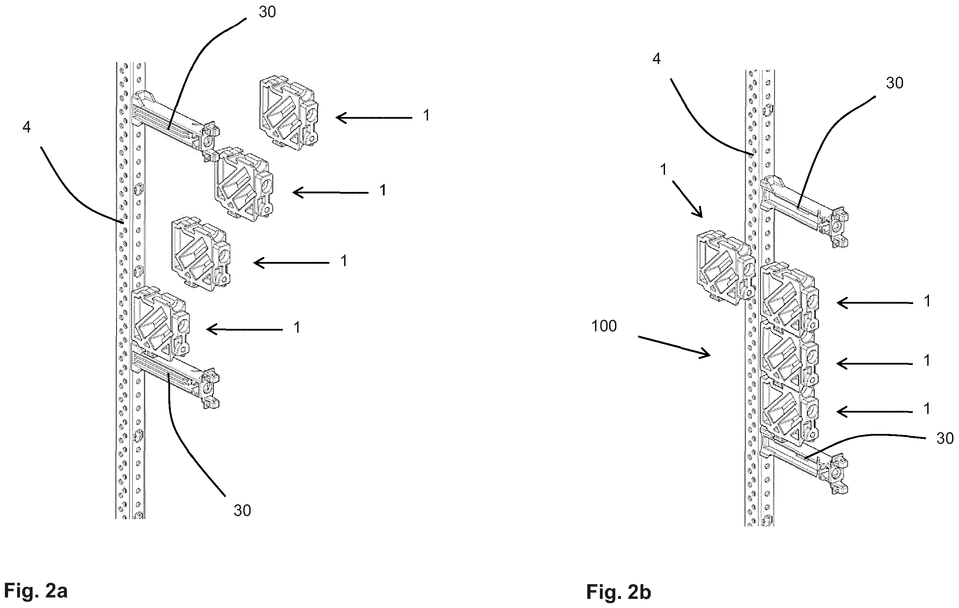

Am ersten Verbindungsabschnitt 8.4 ist ein weibliches Verbindungselement 16 und am zweiten Verbindungsabschnitt 8.5 ein komplementär zu diesem ausgebildetes männliches Verbindungselement 18 geformt, welches von der Seite her unter Erzeugung eines Formschlusses in das weibliche Verbindungselement 16 eines weiteren identisch ausgebildeten Halteelements 1 eingeführt werden kann, wie dies in Fig. 2a und 2b angedeutet ist, um zwei Halteelemente 1 zu einem in Fig. 2c gezeigten Halteelemente 100 zusammen zu fügen.

Hierzu sind das weibliche Verbindungselement 16 als eine in den Figuren gezeigte T-förmige Nut und das männliche Verbindungselement 18 als T- förmiger Vorsprung ausgeführt, welch letzter eine der Form der Nut angepasste Form besitzt.

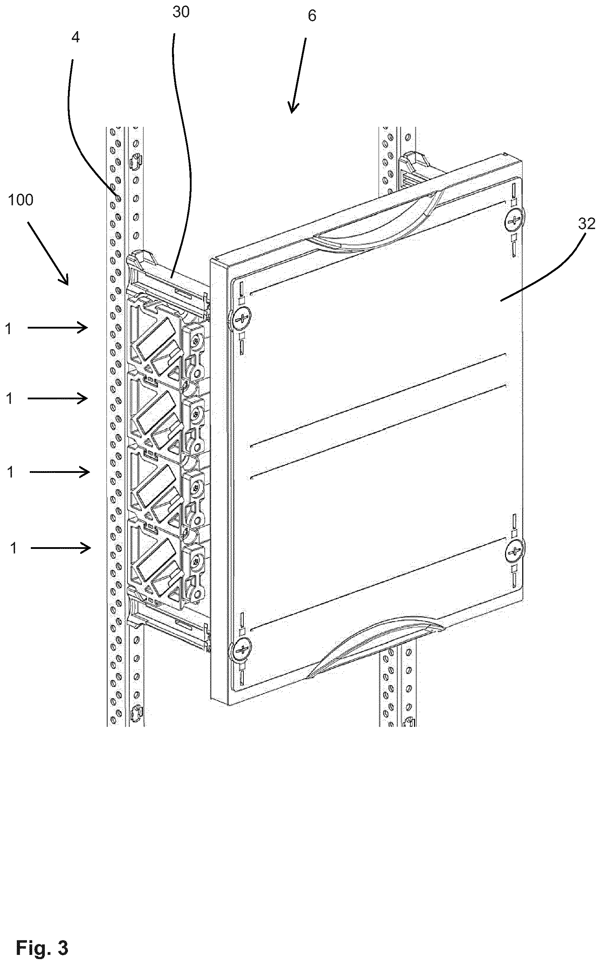

Wie in Fig. 1a und 1b gezeigt ist, umfasst die Öffnung 12 im Grundkörper 8 eine im weiblichen Verbindungelement 16 geformte erste Teilöffnung, die als erste Teilbohrung 12.1 ausgeführt ist, und eine im männlichen Verbindungselement 18 geformte zweite Teilöffnung 12.2, die ebenfalls als zweite Teilbohrung 12.2 ausgeführt ist, durch welche hindurch das Schraubelement 14 zur Verriegelung der formschlüssigen Verbindung zwischen dem weiblichen und männlichen Verbindungsemelement 16, 18 gleichzeitig hindurchgeführt werden kann. Die erste Teilbohrung 12.1 und die zweite Teilbohrung 12.2 verlaufen dabei nach Art eines Türscharniers wechselweise entlang der selben Einschraubachse des Schraubelements 14, so dass nach dem Einfügen des Schraubelements 14 in die Teilbohrungen 12.1 und 12.2 die männlichen und weiblichen Verbindungselemente 18 und 16 in einer in Fig. 2c und 3 gezeigten erfindungsgemäßen Halteeinrichtung 100 gegen ein Herausrutschen verriegelt werden und die Halteelemente 1, welche eine Halteeinrichtung 100 bilden, über das Schraubelement 14 mit der zugehörigen Lochschiene 4 verbunden werden.

An der Klemmfläche 8.3 sind in vorteilhafter Weise in Fig. 1a und 1b angedeutete Vorsprünge 20 geformt, welche unter Erzeugung eines Formschlusses in Löcher 4a der Lochschiene 4 aufgenommen werden.

Gemäß der Darstellung von Fig. 1b ist in den Seitenflächen 8.1, 8.2 des Grundkörpers 8 eine weitere Ausnehmung 22 geformt, die eine von der Ausnehmung 10 abweichende Rechteckform besitzt, deren Längsachse gegenüber der Klemmfläche 8.3 in einem Winkel α geneigt angeordnet ist, der bevorzugt 45 ° beträgt, aber auch einen davon abweichenden Wert aufweisen kann.

In der Ausnehmung 10 ist ferner ein Anschlag 24 angeordnet, der ein freies Hindurchschieben des zugehörigen Endes einer Sammelschiene 2 verhindert und der bevorzugt integral mit dem Grundkörper 8 in einem Stück geformt ist und die Stirnseite der zugehörigen Sammelschiene 2 elektrisch isolieren. Der Anschlag 24 kann mit einem geeigneten Werkzeug aus der Ausnehmung 10 heraus gebrochen werden, um das Halteelemente 1 als Zwischenhalter einzusetzen.

Wie in den Darstellungen der Fig. 1b und 1c angedeutete ist, kann in einem der Klemmfläche 8.3 gegenüberliegenden Frontabschnitt 8.6 des Grundkörpers 8 eine mit der Ausnehmung 10 kommunizierende Durchgangsöffnung 26 geformt sein, in welche eine Schraube 28 zum klemmenden Fixieren der Sammelschiene 2 in der Ausnehmung 10 einschraubbar ist.

Schließlich können die erfindungsgemäßen Halteelemente 1 zu einer in Fig. 2c und 3 gezeigten Halteeinrichtung 100 zusammengefügt werden, welche nach dem Aufsetzen auf eine Lochschiene 4 jeweils eine Seitenwand eines Verteilers 6 bildet, bei welchem die zwischen den beiden Halteeinrichtungen 100 aufgenommenen Sammelschienen 2 durch eine Abdeckplatte 32 aus isolierendem Werkstoff abgedeckt werden können, welche an Abstandhaltern 30 auf den Lochschienen 4 befestigbar ist, um einen unbeabsichtigten Kontakt mit den stromführenden Sammelschienen 2 innerhalb des aus den beiden Halteeinrichtungen 100, den Sammelschienen und der Abdeckplatte 32 bestehenden Verteilers 6 zu verhindern.

### Bezugszeichenliste

- 1: modulares Halteelement
- 2: elektrische Sammelschiene
- 4: Lochschiene
- 4a: Löcher in Lochschiene
- 6: elektrischer Verteiler
- 8: Grundkörper
- 8.1: erste Seitenfläche des Grundkörpers
- 8.2: zweite Seitenfläche des Grundkörpers
- 8.3: Klemmfläche
- 8.4: erster Verbindungsabschnitt
- 8.5: zweiter Verbindungsabschnitt
- 8.6: Frontabschnitt
- 10: Ausnehmung
- 12: Öffnung
- 12.1: erste Teilbohrung
- 12.2: zweite Teilbohrung
- 14: Schraubelement
- 16: weibliches Verbindungselement
- 18: männliches Verbindungselement
- 20: Vorsprünge
- 22: Ausnehmung in Seitenflächen
- 24: entfernbarer Anschlag
- 26: Durchgangsöffnung
- 28: Schraube
- 30: Abstandshalter
- 32: Abdeckplatte
- 100: Halteeinrichtung
- α: Winkel zwischen Längsachse der Ausnehmung und der Klemmfläche A

## Patentansprüche

1. Modulares Halteelement (1) zur Befestigung einer elektrischen Sammelschiene (2) an einer Lochschiene (4) eines elektrischen Verteilers (6), umfassend einen Grundköper (8), der einander gegenüberliegende erste und zweite Seitenflächen (8.1, 8.2), eine orthogonal zu diesen angeordnete Klemmfläche (8.3) sowie orthogonal zu den Seitenflächen (8.1, 8.2) und zu der Klemmfläche (8.3) angeordnete Verbindungsabschnitte (8.4, 8.5) aufweist, wobei in wenigstens einer der beiden Seitenflächen (8.1, 8.2) eine Ausnehmung (10) zur Aufnahme eines Endes einer Sammelschiene (2) geformt ist, und der Grundkörper (8) eine Öffnung (12) aufweist, durch die hindurch ein Schraubelement (14) zur Erzeugung einer Klemmkraft zwischen der Klemmfläche (8.3) und der Lochschiene (4) hindurchführbar ist, wobei der erste und zweite Verbindungsabschnitt (8.4, 8.5) einander gegenüberliegend am Grundkörper (8) geformt sind, und am ersten Verbindungsabschnitt (8.4) ein weibliches Verbindungselement (16) und am zweiten Verbindungsabschnitt (8.5) ein komplementär zu diesem ausgebildetes männliches Verbindungselement (18) geformt ist, welches unter Erzeugung eines Formschlusses in das weibliche Verbindungselement (16) eines weiteren identisch ausgebildeten Halteelements (1) einführbar ist,
**dadurch gekennzeichnet, dass**
die Öffnung (12) eine im weiblichen Verbindungselement (16) geformte erste Teilbohrung (12.1) und eine im männlichen Verbindungselement (18) geformte zweite Teilbohrung (12.2) umfasst, wobei, wenn das männliche Verbindungselement (18) in das weibliche Verbindungselement (16) des weiteren Halteelements (1) eingefügt ist die erste Teilbohrung (12.1) des weiteren Halteelements (1) und die zweite Teilbohrung (12.2) ineinander greifen und wechselweise entlang derselben Einschraubachse des Schraubelements (14) verlaufen, so dass nach dem Einfügen des Schraubelements (14) in die erste und zweite Teilbohrung (12.1, 12.2) das männliche Verbindungselement (18) und das weibliche Verbindungselement (16) des weiteren Halteelements (1) gegen ein Herausrutschen verriegelt werden.

2. Modulares Halteelement nach Anspruch 1,
**dadurch gekennzeichnet, dass**
das weibliche Verbindungselement (16) eine T-förmige oder schwalbenschwanzförmige Nut und das männliche Verbindungselement (18) einen der Form der Nut angepassten Vorsprung umfasst.

3. Modulares Halteelement nach einem der vorhergehenden Ansprüche,
**dadurch gekennzeichnet, dass**
an der Klemmfläche (8.3) Vorsprünge (20) geformt sind, welche zur Erzeugung eines Formschlusses in Löchern (4a) der Lochschiene (4) aufnehmbar sind.

4. Modulares Halteelement nach einem der vorhergehenden Ansprüche,
**dadurch gekennzeichnet, dass**
in den Seitenflächen (8.1, 8.2) eine weitere Ausnehmung (22) mit einer von der Ausnehmung (10) abweichenden Form zur Aufnahme einer Sammelschiene (2) mit einer unterschiedlichen Querschnittsform geformt ist.

5. Modulares Halteelement nach einem der vorhergehenden Ansprüche,
**dadurch gekennzeichnet, dass**
die Ausnehmung (10) eine rechteckige Form aufweist, und dass die Längsachse der Ausnehmung (10) gegenüber der Klemmfläche (8.3) in einem Winkel (α) geneigt angeordnet ist, bevorzugt in einem Winkel (α) von 45 °.

6. Modulares Halteelement nach einem der vorhergehenden Ansprüche,
**dadurch gekennzeichnet, dass**
in der Ausnehmung (10) ein entfernbarer Anschlag (24) angeordnet ist, welcher ein Hindurchschieben des freien Endes einer Sammelschiene (2) verhindert.

7. Modulares Halteelement nach Anspruch 6,
**dadurch gekennzeichnet, dass**
der Grundkörper (8) aus einem thermoplastischen Kunststoffmaterial besteht, und dass der Anschlag (24) integral mit dem Grundkörper (8) geformt ist.

8. Modulares Halteelement nach einem der vorhergehenden Ansprüche,
**dadurch gekennzeichnet, dass**
in einem der Klemmfläche (8.3) gegenüberliegenden Frontabschnitt (8.6) des Grundkörpers (8) eine mit der Ausnehmung (10 kommunizierende Durchgangsöffnung (26) geformt ist, in welche eine Schraube (28) zum Fixieren der Sammelschiene (2) in der Ausnehmung (10) einschraubbar ist.

9. Halteeinrichtung (100) umfassend wenigstens zwei formschlüssig miteinander verbindbare und mittels eines Schraubelements (14) an einer Lochschiene (4) eines elektrischen Verteilers (6) befestigbare modulare Halteelemente (1) nach einem der vorhergehenden Ansprüche.

## Claims

1. Modular holding element (1) for fastening an electrical busbar (2) to a perforated rail (4) of an electrical distributor (6), comprising a basic body (8), which has mutually opposite first and second lateral surfaces (8.1, 8.2), a clamping surface (8.3) arranged orthogonally thereto, and connecting portions (8.4, 8.5) arranged orthogonally to the lateral surfaces (8.1, 8.2) and to the clamping surface (8.3), wherein a cutout (10) for receiving one end of a busbar (2) is formed in at least one of the two lateral surfaces (8.1, 8.2), and the basic body (8) has an opening (12) through which there can be guided a screw element (14) for producing a clamping force between the clamping surface (8.3) and the perforated rail (4), wherein the first and second connecting portion (8.4, 8.5) are formed opposite one another on the basic body (8), and a female connecting element (16) is formed on the first connecting portion (8.4), and a male connecting element (18) designed to be complementary thereto is formed on the second connecting portion (8.5) and, with the production of a form-fitting engagement, can be introduced into the female connecting element (16) of a further identically formed holding element (1),
**characterized in that**
the opening (12) comprises a first part-bore (12.1) formed in the female connecting element (16) and a second part-bore (12.2) formed in the male connecting element (18), wherein, when the male connecting element (18) is inserted into the female connecting element (16) of the further holding element (1), the first part-bore (12.1) of the further holding element (1) and the second part-bore (12.2) inter engage and extend alternately along the same screw-in axis of the screw element (14), with the result that, after the screw element (14) has been inserted into the first and second part-bore (12.1, 12.2), the male connecting element (18) and the female connecting element (16) of the further holding element (1) are locked against sliding out.

2. Modular holding element according to Claim 1,
**characterized in that**
the female connecting element (16) comprises a T-shaped or dovetail-shaped groove, and the male connecting element (18) comprises a projection adapted to the shape of the groove.

3. Modular holding element according to either of the preceding claims,
**characterized in that**
projections (20) are formed on the clamping surface (8.3) that can be received in holes (4a) of the perforated rail (4) to produce a form-fitting engagement.

4. Modular holding element according to one of the preceding claims,
**characterized in that**
a further cutout (22) having a shape differing from the cutout (10) is formed in the lateral surfaces (8.1, 8.2) to receive a busbar (2) having a different cross-sectional shape.

5. Modular holding element according to one of the preceding claims,
**characterized in that**
the cutout (10) has a rectangular shape, and **in that** the longitudinal axis of the cutout (10) is arranged inclined at an angle (α), preferably at an angle (α) of 45°, with respect to the clamping surface (8.3).

6. Modular holding element according to one of the preceding claims,
**characterized in that**
a removable stop (24) is arranged in the cutout (10) that prevents the free end of the busbar (2) from sliding through.

7. Modular holding element according to Claim 6,
**characterized in that**
the basic body (8) consists of a thermoplastic material, and **in that** the stop (24) is integrally formed with the basic body (8).

8. Modular holding element according to one of the preceding claims,
**characterized in that**
a front portion (8.6) of the basic body (8) that is situated opposite to the clamping surface (8.3) has formed therein a through-opening (26) which communicates with the cutout (10) and into which a screw (28) for fixing the busbar (2) in the cutout (10) can be screwed.

9. Holding device (100) comprising at least two modular holding elements (1) according to one of the preceding claims that can be connected to one another in a form-fitting manner and can be fastened by means of a screw element (14) to a perforated rail (4) of an electrical distributor (6).

## Revendications

1. Élément de maintien modulaire (1) permettant de fixer une barre omnibus électrique (2) à une barre perforée (4) d'un répartiteur électrique (6), comportant un corps de base (8) qui comprend des première et deuxième surfaces latérales (8.1, 8.2) opposées l'une à l'autre, une surface de serrage (8.3) disposée perpendiculairement à celles-ci ainsi que des parties de liaison (8.4, 8.5) disposées perpendiculairement aux surfaces latérales (8.1, 8.2) et à la surface de serrage (8.3), dans lequel un évidement (10) destiné à recevoir une extrémité d'une barre omnibus (2) est formé dans au moins l'une des deux surfaces latérales (8.1, 8.2), et le corps de base (8) comprend une ouverture (12) à travers laquelle un élément fileté (14) peut être guidé pour produire une force de serrage entre la surface de serrage (8.3) et la barre perforée (4), dans lequel les première et deuxième parties de liaison (8.4, 8.5) sont formées de manière opposée l'une à l'autre sur le corps de base (8), et un élément de liaison femelle (16) est formé sur la première partie de liaison (8.4) et un élément de liaison mâle (18) réalisé de manière complémentaire à celui-ci est formé sur la deuxième partie de liaison (8.5), lequel élément de liaison mâle peut être inséré dans l'élément de liaison femelle (16) d'un autre élément de maintien (1) réalisé de manière identique en produisant un engagement par complémentarité de forme, **caractérisé en ce que**
l'ouverture (12) comporte un premier alésage partiel (12.1) formé dans l'élément de liaison femelle (16) et un deuxième alésage partiel (12.2) formé dans l'élément de liaison mâle (18), le premier alésage partiel (12.1) de l'autre élément de maintien (1) et le deuxième alésage partiel (12.2) s'interpénétrant et s'étendant alternativement le long du même axe de vissage de l'élément fileté (14) lorsque l'élément de liaison mâle (18) est inséré dans l'élément de liaison femelle (16) de l'autre élément de maintien (1), de telle sorte qu'après l'insertion de l'élément fileté (14) dans le premier et le deuxième alésage partiel (12.1, 12.2),
l'élément de liaison mâle (18) et l'élément de liaison femelle (16) de l'autre élément de maintien (1) sont verrouillés de manière à les empêcher de sortir par glissement.

2. Élément de maintien modulaire selon la revendication 1,
**caractérisé en ce que**
l'élément de liaison femelle (16) comporte une rainure en forme de T ou en forme de queue d'aronde et l'élément de liaison mâle (18) comporte une saillie adaptée à la forme de la rainure.

3. Élément de maintien modulaire selon l'une des revendications précédentes,
**caractérisé en ce que**
des saillies (20) sont formées sur la surface de serrage (8.3), lesquelles peuvent être reçues dans des trous (4a) de la barre perforée (4) pour produire un engagement par complémentarité de forme.

4. Élément de maintien modulaire selon l'une des revendications précédentes,
**caractérisé en ce**
**qu'**un autre évidement (22) présentant une forme différant de l'évidement (10) est formé dans les surfaces latérales (8.1, 8.2) pour la réception d'une barre omnibus (2) présentant une forme en section transversale différente.

5. Élément de maintien modulaire selon l'une des revendications précédentes,
**caractérisé en ce que**
l'évidement (10) présente une forme rectangulaire, et **en ce que** l'axe longitudinal de l'évidement (10) est disposé de manière inclinée suivant un angle (α) par rapport à la surface de serrage (8.3), de préférence suivant un angle (α) de 45°.

6. Élément de maintien modulaire selon l'une des revendications précédentes,
**caractérisé en ce**
**qu'**une butée amovible (24) est disposée dans l'évidement (10), laquelle empêche un glissement de l'extrémité libre d'une barre omnibus (2) à travers cet évidement.

7. Élément de maintien modulaire selon la revendication 6,
**caractérisé en ce que**
le corps de base (8) est constitué d'une matière synthétique thermoplastique, et **en ce que** la butée (24) est formée d'un seul tenant avec le corps de base (8).

8. Élément de maintien modulaire selon l'une des revendications précédentes,
**caractérisé en ce**
**qu'**une ouverture traversante (26) communiquant avec l'évidement (10) est formée dans une partie frontale (8.6), opposée à la surface de serrage (8.3), du corps de base (8), ouverture traversante dans laquelle une vis (28) servant à la fixation de la barre omnibus (2) dans l'évidement (10) peut être vissée.

9. Dispositif de maintien (100) comportant au moins deux éléments de maintien modulaires (1) selon l'une des revendications précédentes, pouvant être reliés l'un à l'autre par complémentarité de forme et pouvant être fixés au moyen d'un élément fileté (14) à une barre perforée (4) d'un répartiteur électrique (6).
